(19) Europäisches Patentamt
European Patent Office
Office européen des brevets

(11) **EP 3 054 549 B1**

(12) **FASCICULE DE BREVET EUROPEEN**

(45) Date de publication et mention
de la délivrance du brevet:
**23.05.2018 Bulletin 2018/21**

(51) Int Cl.:
***H02J 3/00*** *(2006.01)* ***H02J 3/38*** *(2006.01)*
***H02J 4/00*** *(2006.01)*

(21) Numéro de dépôt: **16154077.8**

(22) Date de dépôt: **03.02.2016**

(54) **INSTALLATION ÉLECTRIQUE DE NAVIRE, NAVIRE QUI EN EST ÉQUIPÉ ET PROCÉDÉ DE PILOTAGE D'UNE TELLE INSTALLATION**

ELEKTRISCHE ANLAGE FÜR EIN SCHIFF, SCHIFF MIT EINER SOLCHEN ANLAGE UND VERFAHREN ZUR STEUERUNG EINER SOLCHEN ANLAGE

ELECTRICAL FACILITY FOR A SHIP, SHIP PROVIDED WITH SAME AND METHOD FOR CONTROLLING SUCH A FACILITY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.02.2015 FR 1550964**

(43) Date de publication de la demande:
**10.08.2016 Bulletin 2016/32**

(73) Titulaire: **STX FRANCE S.A.**
**44600 Saint Nazaire (FR)**

(72) Inventeurs:
• **MONEUSE, Nicolas**
**44500 La Baule - Escoublac (FR)**
• **JACQUES, Arnaud**
**44600 Saint Nazaire (FR)**
• **LORANG, Matthieu**
**44320 Saint Père en Retz (FR)**

(74) Mandataire: **Regimbeau**
**Parc d'affaires Cap Nord A**
**2, allée Marie Berhaut**
**CS 71104**
**35011 Rennes Cedex (FR)**

(56) Documents cités:
**WO-A2-2005/049418**

EP 3 054 549 B1

**Description**

**DOMAINE DE L'INVENTION**

L'invention concerne l'architecture électrique sur les navires et son fonctionnement.

**ARRIERE PLAN TECHNOLOGIQUE DE L'INVENTION**

L'architecture électrique actuelle qui est disponible sur les navires à propulsion "Diesel Electrique" est essentiellement une architecture à tension alternative.

La production d'électricité est assurée par des groupes Diesel-alternateur produisant une tension alternative (TA). Le réseau électrique disponible dans le navire assure la distribution de cette tension alternative vers les différents équipements consommateurs d'électricité (ci-après appelés "les consommateurs"), parmi lesquels on compte les moteurs électriques de propulsion, les différents équipements installés dans le compartiment machine du navire (pompe, ventilateurs, compresseur, etc...) ainsi que les équipements de la partie "hôtelière" du navire (système d'éclairage, prises électriques, ordinateurs, installation de chauffage / climatisation, etc.).

Différents tableaux électriques regroupent les départs des différents équipements du navire en fonction de leur tension et de leur localisation.

On peut ainsi avoir affaire à plusieurs tensions différentes distribuées à bord du navire. Ainsi, on peut distribuer de la haute tension à 11kV par exemple, et de la basse tension, à 440V et 230V.

Afin d'obtenir une fréquence constante sur ces réseaux, le fonctionnement des groupes Diesel-alternateurs est à vitesse constante, quelle que soit la puissance demandée par les consommateurs.

Ces dernières années, des projets de navires ont été développés, qui mettent en oeuvre des architectures utilisant une tension continue (TC). L'architecture la plus répandue consiste à conserver des groupes Diesel-alternateurs produisant une tension alternative (TA). La tension est alors convertie en tension continue, laquelle est distribuée sur le réseau électrique. Cette tension continue est distribuée ensuite vers les différents consommateurs soit directement si ces derniers acceptent ce type de tension, soit au travers de convertisseurs qui transforment la tension continue en tension alternative.

L'avantage de cette architecture est d'offrir la possibilité de faire fonctionner les groupes Diesel-alternateurs à une vitesse de rotation indépendante du besoin en fréquence constante des consommateurs, et d'adapter cette vitesse en fonction de la puissance demandée par l'ensemble des consommateurs.

A basse charge des groupes Diesel-alternateurs, il en résulte un gain en consommation spécifique. Mais il faut noter que cette architecture particulière engendre des conversions TA/TC et TC/TA qui se font par le biais d'équipements de conversion de puissance.

Ces conversions entraînent des pertes énergétiques qui se répercutent négativement sur l'avantage engendré par le fonctionnement à vitesse variable des groupes Diesel-alternateurs.

A simple titre d'exemple, les documents suivants décrivent de telles architectures : US2010/0094490 et EP2423103.

L'état de la technique peut encore être illustré par le document WO 2005/049418 qui se rapporte à un navire qui est propulsé par un premier ensemble de propulseurs orientables et par un second ensemble de propulseurs de type water jet.

Par ailleurs, WO 98/11643 décrit une installation de propulsion de navire qui comprend un moteur principal associé à un générateur. Le démarrage de ce dernier est assuré par un moteur secondaire fournissant du courant alternatif.

Enfin, WO 2005/049418 se rapporte à un navire propulsé par un premier ensemble de propulseurs orientables et un second ensemble de propulseurs de type water-jet.

Il enseigne la possibilité de connecter un réseau de tension alternative, raccordé à une source d'énergie, à un réseau de tension continue par l'intermédiaire d'un transformateur et d'un convertisseur réversible.

La présente invention a pour but de pallier ce problème lié aux pertes qui résultent de multiples conversions et aussi de tirer la meilleure partie des avantages liés respectivement aux architectures à tension alternative et aux architectures à tension continue.

**RESUME DE L'INVENTION**

Conformément à un premier aspect, la présente invention se rapporte à une installation électrique de navire qui comprend au moins une source d'énergie de tension alternative, caractérisée par le fait qu'elle comporte un premier réseau de distribution de tension alternative associé à un premier ensemble d'appareils électriques qui équipent le navire, un second réseau de distribution de tension continue associé à un second ensemble d'appareils électriques qui équipent le navire, ainsi qu'un commutateur pour connecter ladite source d'énergie sélectivement soit avec le premier réseau, soit avec le second réseau.

Selon d'autres caractéristiques non limitatives et avantageuses de cette installation:

- ladite source d'énergie de tension alternative est choisie parmi l'un ou l'autre des matériels suivants : un moteur Diesel, une turbine à gaz, une turbine à vapeur, chacun de ces matériels étant combiné à un alternateur ;
- quand l'installation comprend au moins deux sources d'énergie de tension alternative, chaque source d'énergie possède son propre commutateur pour la connecter avec le premier réseau ou avec le second réseau, le commutateur associé à une source d'énergie étant indépendant du commutateur associé à l'autre source d'énergie /aux autres sources d'énergie ;
- ladite source d'énergie fonctionne à vitesse fixe ou variable, selon qu'elle est connectée au premier réseau ou au second réseau ;
- quand l'installation nécessite une redondance dans la production d'énergie électrique, alors l'installation comprend au moins deux sources d'énergie, et ledit premier réseau de tension alternative est scindé en deux parties indépendantes, au moins une source d'énergie étant configurée pour être commutée avec l'une de ces deux parties, tandis qu'au moins une autre source d'énergie est configurée pour être commutée avec l'autre de ces deux parties ;
- chacune des deux parties indépendante est conformée pour être commutée avec le second réseau de tension continue ;
- les deux parties indépendantes dudit premier réseau comportent des moyens de connexion de l'une à l'autre ;
- elle comporte au moins un convertisseur réversible configuré pour transférer de l'énergie du premier réseau au second réseau et inversement ;
- entre ladite source d'énergie et le second réseau de distribution de tension continue est présent au moins un convertisseur tension alternative / tension continue.

L'idée à la base de l'invention est de combiner deux architectures TA/TC pour former une architecture "hybride" permettant de tirer les avantages de ces deux architectures et des effets de synergie qui en découlent, afin d'offrir un rendement énergétique optimal quels que soient les consommateurs électriques connectés sur le réseau de distribution du navire.

L'invention se rapporte également à un navire pourvu d'une telle installation.

Un autre aspect de l'invention se rapporte à un procédé de pilotage d'une installation électrique conforme à l'une des caractéristiques décrite ci-dessus, caractérisé par le fait que l'on fait fonctionner ladite source d'énergie à vitesse fixe lorsqu'elle est commutée audit premier réseau de fourniture de tension alternative, tandis que l'on fait fonctionner ladite source d'énergie à vitesse variable lorsqu'elle est commutée audit second réseau de fourniture de tension continue.

Selon d'autres caractéristiques non limitatives et avantageuses de ce procédé :

- une seule source d'énergie est en fonctionnement, et l'on commute ladite source d'énergie audit second réseau de fourniture de tension continue, lorsque la puissance appelée par le réseau est inférieure à une valeur prédéfinie, tandis que l'on commute ladite source d'énergie audit premier réseau de fourniture de tension alternative, lorsque la puissance appelée par le réseau est supérieure à cette valeur prédéfinie ;
- ladite valeur prédéfinie correspond à une valeur de puissance pour laquelle la consommation de combustible par ladite source d'énergie est optimale ;
- ladite puissance P est telle qu'elle satisfait à la relation suivante :

$$SFOC_{VS}\left(\frac{\frac{P}{\eta_{conversionVS}}}{P_{nominale}}\right) * \frac{P}{\eta_{conversionVS}} = SFOC_{CS}\left(\frac{\frac{P}{\eta_{conversionCS}}}{P_{nominale}}\right) * \frac{P}{\eta_{conversionCS}}$$

relation dans laquelle :

$SFOC_{VS}$(charge): *Consommation spécifique de la source d'énergie à vitesse variable en fonction de sa charge*
$SFOC_{CS}$(charge): *Consommation spécifique de la source d'énergie à vitesse constante en fonction de sa charge*
*P: Puissance appelée par le réseau, en aval des convertisseurs, transformateurs et alternateurs*
$\eta_{conversion}$ : *Rendement de conversion des alternateurs, convertisseurs et transformateurs nécessaires à la distribution électrique* $P_{nominale}$ = *Puissance nominale de la source d'énergie*

- ledit navire comporte au moins deux sources d'énergie, et l'on commute au moins une source d'énergie audit premier réseau de fourniture de tension alternative et au moins une autre source d'énergie audit second réseau de fourniture de tension continue ;

- l'on configure le fonctionnement desdites sources d'énergie de manière à ce que la consommation en combustible de l'installation soit minimale ;

- ledit pilotage est opéré par un système automatique de contrôle et de commande.

## BREVE DESCRIPTION DES DESSINS

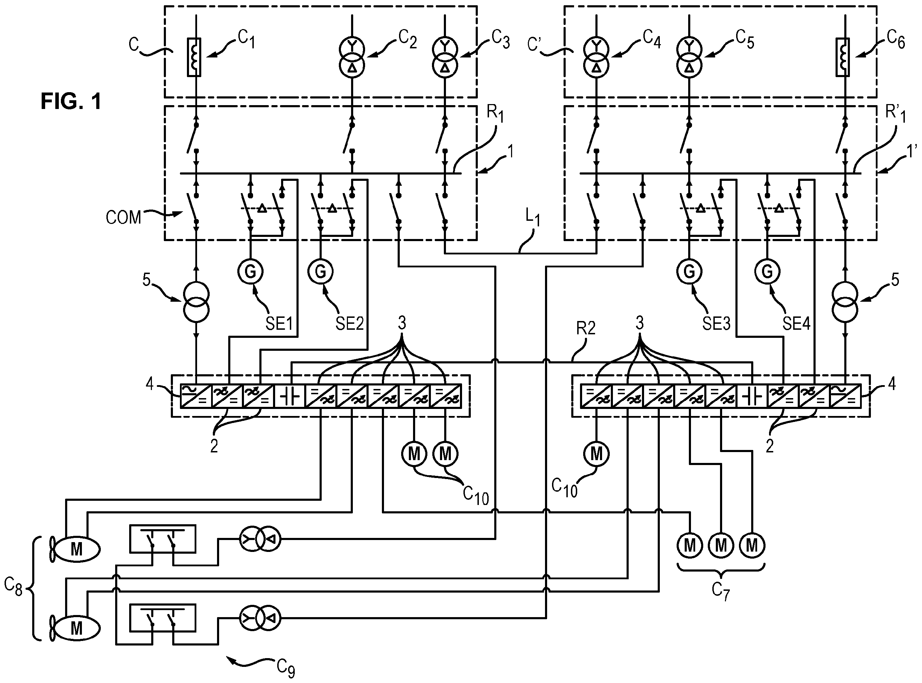

D'autres caractéristiques et avantages de l'invention apparaîtront à la lecture de la description détaillée qui va suivre. Elle sera faite en référence au dessin annexé dans lesquels la figure 1 est un schéma d'une installation électrique conforme à un mode de réalisation possible de l'invention.

## DESCRIPTION DETAILLEE DE L'INVENTION

Dans l'exemple de la configuration de la figure annexée, le navire dont il s'agit comporte quatre sources d'énergie identifiées SE1, SE2, SE3 et SE4.

Dans ce cas d'espèce, on suppose que l'on a affaire à quatre sources d'énergie, consistant en des alternateurs, chacun associé à un moteur Diesel non représenté, pour fournir une tension électrique alternative.

Bien entendu, dans des variantes de l'invention qui ne sont pas représentées ici, on peut avoir affaire à un nombre différent de sources d'énergie, inférieur ou supérieur à quatre.

Dans des modes de réalisation non représenté, ces moteurs pourraient être remplacés notamment par des turbines à gaz, des turbines à vapeur, chacun de ces matériels étant combiné à un alternateur.

Les deux sources SE1 et SE2 sont par exemple placées ensemble dans un compartiment, tandis que les deux sources SE3 et SE4 sont placées dans un autre compartiment du navire. On peut envisager le cas où seules deux de ces quatre sources sont suffisantes pour produire toute l'électricité nécessaire au fonctionnement du navire. Dans une telle situation, les deux autres sources sont redondantes et ne sont là que pour pallier à une indisponibilité de l'une ou l'autre des deux premières sources (panne réparable, source hors d'usage, maintenance, etc.).

L'installation comprend aussi un premier réseau R1 de tension alternative associé à un premier ensemble C d'appareils électriques alimentés à fréquence fixe, qui équipent le navire.

Dans l'exemple présenté ici, l'ensemble C comprend une inductance C1 et deux transformateurs C2 et C3 reliés à un tableau de distribution de basse tension.

Bien entendu, l'ensemble C est dupliqué en un ensemble C' associé à un réseau R1', qui comprend deux transformateurs C4 et C5 reliés à un tableau de distribution de basse tension. De manière similaire à ce qui précède, on a aussi affaire à une inductance C6.

L'installation électrique selon l'invention comporte également un second réseau R2 de distribution de tension continue, associé à un second ensemble d'appareils électriques pouvant être alimentés à fréquence variable qui équipent le navire.

Dans ce mode de réalisation sont connectés sur le réseau R2 trois moteurs électrique de propulseur d'étrave C7 destinés à permettre le déplacement latéral du navire (par exemple pour la réalisation de manoeuvres au sein d'un port). Y sont également connectés deux moteurs électriques de propulsion C8, des tableaux d'alimentation C9 des auxiliaires dédiés au fonctionnement de la propulsion et enfin des moteurs électriques C10 destinés à l'entrainement des compresseurs des groupes frigorifiques nécessaires à la climatisation du navire, etc.

Dans un mode de réalisation non représenté, une ou plusieurs sources d'énergie de tension continue (par exemple, batterie, pile à combustible, module photovoltaïque,...) sont connectées au réseau R2.

Chacune des sources SE1, SE2, SE3 et SE4 est configurée pour être commutée sélectivement soit avec le premier réseau R1, soit avec le second réseau R2, via un ensemble de commutateurs électriques COM qui, bien entendu, ne sont pas tous synchronisés.

Ceci peut se faire en toute indépendance, ce qui signifie par exemple que la source SE1 peut être reliée au réseau R1, tandis que les autres sources peuvent être reliées au réseau R2, ou toutes autres combinaisons possibles.

Quand l'une desdites sources est connectée au réseau alternatif R1, alors cette source de tension alternative alimente directement les équipements C1 à C6.

En revanche, quand l'une desdites sources est connectée au réseau R2 de tension continue, alors une liaison est réalisée avec un convertisseur tension alternative/tension continue 2. Cette tension continue est soit directement distribuée aux consommateurs acceptant une tension continue, soit à son tour convertie en tension alternative via des convertisseurs tension continue/ tension alternative 3.

Alors, cette tension alternative est distribuée aux équipements C7 à C10 décrits précédemment.

On notera que les deux réseaux de courant alternatif R1 et R1' peuvent être reliés ensemble via deux commutateurs COM et une ligne électrique L1.

Une connexion entre les réseaux de courant alternatif R1 et R1' et le réseau R2 de courant continu est rendue possible par la présence d'un ensemble comprenant un transformateur 5 et un convertisseur réversible 4.

Les sources SE1 à SE4 ont deux modes de fonctionnement possibles. Celles qui sont connectées sur le réseau R2 fonctionnent à vitesse variable, ce qui permet d'optimiser leur consommation spécifique.

Celles qui sont connectées sur le réseau de tension alternative R1 (ou R1') fonctionnent à vitesse fixe. Ainsi, elles permettent d'alimenter "en direct" les consommateurs connectés sur le réseau précité (en l'occurrence les appareils C1, C2 et C3, voire C4, C5 et C6). Ainsi, il n'est aucunement besoin d'utiliser des convertisseurs tension alternative/ tension continue et tension continue/ tension alternative. Les pertes de distribution vers ces consommateurs sont donc très limitées.

En tout état de cause, lors du fonctionnement de la présente installation, on cherche à consommer le moins possible de combustible. Pour ce faire, on veut faire fonctionner les sources d'énergie à leur meilleur rendement et limiter les pertes électriques liées à l'utilisation de convertisseurs.

Ainsi, si l'installation de l'invention comporte une seule source d'énergie (en l'occurrence un seul moteur Diesel) ou si une seule source est mise en fonctionnement, alors, dans l'hypothèse où sa charge est faible (par exemple 60% de sa charge nominale ou moins), il est avantageux d'alimenter le réseau R2 de tension continue.

Les consommateurs C1 à C6 du réseau de tension alternative R1/R1' sont alors alimentés par l'intermédiaire du réseau R2 et de l'ensemble comprenant le convertisseur réversible 4 et le transformateur 5. La source fonctionne alors à vitesse variable et sa consommation spécifique est alors optimisée.

En revanche, si sa charge est plus importante, il est avantageux d'alimenter le réseau de tension alternative R1 (R1'). Les consommateurs C7 à C10 du réseau de tension continue R2 sont alimentés par l'intermédiaire du réseau de tension alternative et de l'ensemble comprenant le convertisseur réversible 4 et le transformateur 5. La source fonctionne à vitesse constante, proche de sa consommation optimale. Ce mode de fonctionnement limite le nombre de conversions et optimise la consommation en combustible.

Lorsque le nombre nécessaire de sources est au moins égal à deux, une ou plusieurs sources fonctionnent à vitesse fixe pour alimenter le réseau de tension alternative R1 (R1'). Les autres sources fonctionnent à vitesse variable en alimentant le réseau de tension continue R2.

La charge de la ou des sources connectées à R1 peut être avantageusement réglée par l'intermédiaire de l'ensemble comprenant le convertisseur réversible 4 et le transformateur 5, de manière à ce que leur consommation spécifique soit moindre. En fonction de la répartition des puissances appelées sur les réseaux de tension continue et de tension alternative, un transfert de puissance active et/ou réactive est opéré entre les deux réseaux. La consommation globale est ainsi optimisée.

Par rapport à une installation fonctionnant seulement avec une ou des sources à vitesse constante, le gain de consommation peut ici atteindre 5 à 10% en fonction des conditions d'utilisation du navire.

**Revendications**

1. Installation électrique de navire, comprenant au moins une source d'énergie (SE1, SE2, SE3, SE4) de tension alternative, un premier réseau (R1, R1') de distribution de tension alternative associé à un premier ensemble d'appareils électriques ($C_1$, $C_2$, $C_3$, $C_4$, $C_5$, $C_6$) qui équipent le navire, un second réseau (R2) de distribution de tension continue associé à un second ensemble d'appareils électriques ($C_7$, $C_8$, $C_9$, $C_{10}$) qui équipent le navire, **caractérisée par le fait qu'**elle comporte un commutateur (COM) pour connecter ladite source d'énergie (SE1, SE2, SE3, SE4) sélectivement soit avec le premier réseau (R1, R1'), soit avec le second réseau (R2).

2. Installation selon la revendication 1, **caractérisée par le fait que** ladite source d'énergie (SE1, SE2, SE3, SE4) de tension alternative est choisie parmi l'un ou l'autre des matériels suivants : un moteur diesel, une turbine à gaz, une turbine à vapeur, chacun de ces matériels étant combiné à un alternateur.

3. Installation selon l'une des revendications précédentes, **caractérisée par le fait que** ladite source d'énergie (SE1, SE2, SE3, SE4) fonctionne à vitesse fixe ou variable, selon qu'elle est connectée au premier réseau (R1, R1') ou au second réseau (R2).

4. Installation selon l'une des revendications précédentes qui comprend au moins deux sources d'énergie de tension alternative (SE1, SE2, SE3, SE4), **caractérisée par le fait que** chaque source d'énergie possède son propre commutateur (COM) pour la connecter avec le premier réseau (R1) ou avec le second réseau (R2), le commutateur associé à une source d'énergie étant indépendant du commutateur associé à l'autre source d'énergie /aux autres sources d'énergie.

**5.** Installation selon l'une des revendications précédentes, qui lorsqu'elle nécessite une redondance dans la production d'énergie électrique, comprend alors au moins deux sources d'énergie (SE1, SE2, SE3, SE4), **caractérisée par le fait que** ledit premier réseau de tension alternative est scindé en deux parties indépendantes (R1, R1'), au moins une source d'énergie étant configurée pour être commutée avec l'une de ces deux parties, tandis qu'au moins une autre source (R1', R1) d'énergie est configurée pour être commutée avec l'autre de ces deux parties.

**6.** Installation selon la revendication 5, **caractérisée par le fait que** chacune des deux parties indépendantes (R1, R1') est conformée pour être commutée avec le second réseau (R2) de tension continue.

**7.** Installation selon la revendication 5 ou 6, **caractérisée par le fait que** les deux parties indépendantes (R1, R1') dudit premier réseau comportent des moyens de connexion (COM) de l'une à l'autre.

**8.** Installation selon l'une des revendications précédentes, **caractérisé par le fait qu'**elle comporte au moins un convertisseur réversible (4,5) configuré pour transférer de l'énergie du premier réseau (R1, R1') au second réseau (R2) et inversement.

**9.** Installation selon l'une des revendications précédentes, **caractérisée par le fait qu'**entre ladite source d'énergie (SE1, SE2, SE3, SE4) et le second réseau (R2) de distribution de tension continue est présent au moins un convertisseur tension alternative / tension continue (2).

**10.** Navire pourvu d'une installation électrique conforme à l'une des revendications précédentes.

**11.** Procédé de pilotage d'une installation électrique conforme à l'une des revendications 1 à 9 qui équipe un navire, **caractérisé par le fait que** l'on fait fonctionner ladite source d'énergie (SE1, SE2, SE3, SE4) à vitesse fixe lorsqu'elle est commutée audit premier réseau (R1, R1') de distribution de tension alternative, tandis que l'on fait fonctionner ladite source d'énergie (SE1, SE2, SE3, SE4) à vitesse variable lorsqu'elle est commutée audit second réseau (R2) de distribution de tension continue.

**12.** Procédé selon la revendication 11, dans lequel une seule source (SE1, SE2, SE3, SE4) d'énergie est en fonctionnement, **caractérisé par le fait que** l'on commute ladite source d'énergie audit second réseau (R2) de distribution de tension continue, lorsque la puissance appelée par le réseau est inférieure à une valeur prédéfinie, tandis que l'on commute ladite source d'énergie audit premier réseau (R1, R1') de distribution de tension alternative, lorsque la puissance appelée par le réseau est supérieure à cette valeur prédéfinie.

**13.** Procédé selon la revendication 12, **caractérisé par le fait que** ladite valeur prédéfinie correspond à une valeur de puissance P au-delà de laquelle la consommation de combustible de la source d'énergie à vitesse constante est inférieure à sa consommation de combustible à vitesse variable.

**14.** Procédé selon la revendication 13, **caractérisé par le fait que** ladite puissance P est telle qu'elle satisfait à la relation suivante :

$$SFOC_{VS}\left(\frac{\frac{P}{\eta_{conversionVS}}}{P_{nominale}}\right) * \frac{P}{\eta_{conversionVS}} = SFOC_{CS}\left(\frac{\frac{P}{\eta_{conversionCS}}}{P_{nominale}}\right) * \frac{P}{\eta_{conversionCS}}$$

relation dans laquelle :

$SFOC_{VS}$(charge): *Consommation spécifique de la source d'énergie à vitesse variable en fonction de sa charge*
$SFOC_{CS}$(charge): *Consommation spécifique de la source d'énergie à vitesse constante en fonction de sa charge*
*P: Puissance appelée par le réseau, en aval des convertisseurs, transformateurs et alternateurs*
$\eta_{converssion}$ : *Rendement de conversion des alternateurs, convertisseurs et transformateurs nécessaires à la distribution électrique* $P_{nominale}$ = *Puissance nominale de la source d'énergie*

**15.** Procédé selon la revendication 11 dans lequel ledit navire comporte au moins deux sources d'énergie (SE1, SE2, SE3, SE4), **caractérisé par le fait que** l'on commute au moins une source d'énergie audit premier réseau (R1) de fourniture de tension alternative et au moins une autre source d'énergie audit second réseau (R2) de distribution de tension continue.

**16.** Procédé selon la revendication 13, **caractérisé par le fait que** l'on configure le fonctionnement desdites sources d'énergie de manière à ce que la consommation en combustible de l'installation soit minimale.

**17.** Procédé selon l'une des revendications 11 à 16, **caractérisé par le fait que** ledit pilotage est opéré par un système automatique de contrôle et de commande.


**Patentansprüche**

**1.** Elektrische Anlage für ein Schiff, umfassend mindestens eine Energiequelle (SE1, SE2, SE3, SE4) für Wechselspannung, ein erstes Netz (R1, R1') zur Verteilung von Wechselspannung, zugeordnet einer ersten Einheit elektrischer Geräte ($C_1$, $C_2$, $C_3$, $C_4$, $C_5$, $C_6$), die das Schiff ausstatten, ein zweites Netz (R2) zur Verteilung von Gleichspannung, zugeordnet einer zweiten Einheit elektrischer Geräte ($C_7$, $C_8$, $C_9$, $C_{10}$), die das Schiff ausstatten, **dadurch gekennzeichnet, dass** sie einen Umschalter (COM) aufweist, um die Energiequelle (SE1, SE2, SE3, SE4) wahlweise entweder mit dem ersten Netz (R1, R1') oder mit dem zweiten Netz (R2) zu verbinden.

**2.** Anlage nach Anspruch 1, **dadurch gekennzeichnet, dass** die Energiequelle (SE1, SE2, SE3, SE4) für Wechselspannung aus dem einen oder dem anderen der folgenden Materialien ausgewählt ist: einem Dieselmotor, einer Gasturbine, einer Dampfturbine, wobei jedes dieser Materialien mit einem Generator kombiniert ist.

**3.** Anlage nach einem der vorangehenden Ansprüche, **dadurch gekennzeichnet, dass** die Energiequelle (SE1, SE2, SE3, SE4) mit fester oder variabler Geschwindigkeit arbeitet, je nachdem, ob sie mit dem ersten Netz (R1, R1') oder mit dem zweiten Netz (R2) gekoppelt ist.

**4.** Anlage nach einem der vorangehenden Ansprüche, die mindestens zwei Energiequellen für Wechselspannung (SE1, SE2, SE3, SE4) umfasst, **dadurch gekennzeichnet, dass** jede Energiequelle ihren eigenen Umschalter (COM) besitzt, um sie mit dem ersten Netz (R1) oder mit dem zweiten Netz (R2) zu verbinden, wobei der Umschalter, der einer Energiequelle zugeordnet ist, von dem Umschalter, welcher der anderen Energiequelle / den anderen Energiequellen zugeordnet ist, unabhängig ist.

**5.** Anlage nach einem der vorangehenden Ansprüche, die, wenn sie eine Redundanz bei der Produktion von elektrischer Energie benötigt, dann mindestens zwei Energiequellen (SE1, SE2, SE3, SE4) umfasst, **dadurch gekennzeichnet, dass** das erste Netz für Wechselspannung in zwei unabhängige Teile (R1, R1') unterteilt ist, wobei mindestens eine Energiequelle konfiguriert ist, um mit einem dieser zwei Teile geschaltet zu sein, wogegen mindestens eine andere Energiequelle (R1', R1) konfiguriert ist, um mit dem anderen dieser zwei Teile geschaltet zu sein.

**6.** Anlage nach Anspruch 5, **dadurch gekennzeichnet, dass** jeder der zwei unabhängigen Teile (R1, R1') ausgebildet ist, um mit dem zweiten Netz (R2) für Gleichspannung geschaltet zu sein.

**7.** Anlage nach Anspruch 5 oder 6, **dadurch gekennzeichnet, dass** die zwei unabhängigen Teile (R1, R1') des ersten Netzes Verbindungsmittel (COM) miteinander aufweisen.

**8.** Anlage nach einem der vorangehenden Ansprüche, **dadurch gekennzeichnet, dass** sie mindestens einen reversiblen Umrichter (4, 5) aufweist, um Energie vom ersten Netz (R1, R1') zum zweiten Netz (R2) zu übertragen und umgekehrt.

**9.** Anlage nach einem der vorangehenden Ansprüche, **dadurch gekennzeichnet, dass** zwischen der Energiequelle (SE1, SE2, SE3, SE4) und dem zweiten Netz (R2) zur Verteilung von Gleichspannung mindestens ein Umrichter Wechselspannung / Gleichspannung (2) vorhanden ist.

**10.** Schiff, ausgestattet mit einer elektrischen Anlage nach einem der vorangehenden Ansprüche.

**11.** Verfahren zur Steuerung einer elektrischen Anlage nach einem der Ansprüche 1 bis 9, die ein Schiff ausstattet, **dadurch gekennzeichnet, dass** die Energiequelle (SE1, SE2, SE3, SE4) mit fester Geschwindigkeit betrieben wird, wenn sie mit dem ersten Netz (R1, R1') zur Verteilung von Wechselspannung geschaltet ist, wogegen die Energiequelle (SE1, SE2, SE3, SE4) mit variabler Geschwindigkeit betrieben wird, wenn sie mit dem zweiten Netz (R2) zur Verteilung von Gleichspannung geschaltet ist.

**12.** Verfahren nach Anspruch 11, wobei eine einzige Energiequelle (SE1, SE2, SE3, SE4) im Betrieb ist, **dadurch gekennzeichnet, dass** die Energiequelle mit dem zweiten Netz (R2) zur Verteilung von Gleichspannung geschaltet wird, wenn die von dem Netz abgerufene Leistung kleiner als ein vorbestimmter Wert ist, wogegen die Energiequelle mit dem ersten Netz (R1, R1') zur Verteilung von Wechselspannung geschaltet wird, wenn die von dem Netz abgerufene Leistung größer als dieser vorbestimmte Wert ist.

**13.** Verfahren nach Anspruch 12, **dadurch gekennzeichnet, dass** der vorbestimmte Wert einem Leistungswert P entspricht, jenseits dem der Brennstoffverbrauch der Energiequelle bei konstanter Geschwindigkeit kleiner als ihr Brennstoffverbrauch bei variabler Geschwindigkeit ist.

**14.** Verfahren nach Anspruch 13, **dadurch gekennzeichnet, dass** die Leistung P derart ist, dass sie die folgende Gleichung erfüllt:

$$SFOC_{VS}\left(\frac{\frac{P}{\eta_{conversionVS}}}{P_{nominale}}\right) * \frac{P}{\eta_{conversionVS}} = SFOC_{CS}\left(\frac{\frac{P}{\eta_{conversionCS}}}{P_{nominale}}\right) * \frac{P}{\eta_{conversionCS}}$$

Gleichung, in welcher:

$SFOC_{VS}$ (*Belastung*): *spezifischer Verbrauch der Energiequelle bei variabler Geschwindigkeit in Abhängigkeit ihrer Belastung*

$SFOC_{CS}$(*Belastung*): *spezifischer Verbrauch der Energiequelle bei konstanter Gesch windigkeit in Abhängigkeit ihrer Belastung*

*P: vom Netz nach den Umrichtern, Transformatoren und Generatoren abgerufene Leistung*

$\eta_{conversion}$: *Konversionsleistung der Generatoren, Umrichter und Transformatoren, die für die elektrische Verteilung notwendig sind $P_{nominale}$ = Nennleistung der Energiequelle*

**15.** Verfahren nach Anspruch 11, wobei das Schiff mindestens zwei Energiequellen (SE1, SE2, SE3, SE4) aufweist, **dadurch gekennzeichnet, dass** mindestens eine Energiequelle mit dem ersten Netz (R1) zur Bereitstellung von Wechselspannung geschaltet wird und mindestens eine andere Energiequelle mit dem zweiten Netz (R2) zur Verteilung von Gleichspannung geschaltet wird.

**16.** Verfahren nach Anspruch 13, **dadurch gekennzeichnet, dass** der Betrieb der Energiequellen derart konfiguriert wird, dass der Verbrauch an Brennstoff der Anlage minimal ist.

**17.** Verfahren nach einem der Ansprüche 11 bis 16, **dadurch gekennzeichnet, dass** die Steuerung durch ein automatisches Kontroll- und Steuerungssystem erfolgt.

**Claims**

**1.** An electrical facility for a ship, comprising at least one AC voltage power source (SE1, SE2, SE3, SE4), a first AC voltage distribution network (R1, R1') associated with a first set of electrical equipment ($C_1$, $C_2$, $C_3$, $C_4$, $C_5$, $C_6$) equipping the ship, a second DC voltage distribution network (R2) associated with a second set of electrical equipment ($C_7$, $C_8$, $C_9$, $C_{10}$) equipping the ship, **characterized by** the fact that it comprises a switch (COM) to connect said power source (SE1, SE2, SE3, SE4) selectively either with the first network (R1, R1') or with the second network (R2).

**2.** The facility according to claim 1, **characterized by** the fact that said AC voltage power source (SE1, SE2, SE3, SE4) is selected from among one or other of the following items of equipment: diesel engine, gas turbine, steam turbine, each of these items of equipment being combined with an alternator.

**3.** The facility according to one of the preceding claims, **characterized by** the fact that said power source (SE1, SE2, SE3, SE4) operates at fixed or variable speed, depending on whether it is connected to the first network (R1, R1') or second network (R2).

**4.** The facility according to one of the preceding claims comprising at least two AC voltage power sources (SE1, SE2, SE3, SE4), **characterized by** the fact that each power source has its own switch (COM) for connection thereof with the first network (R1) or with the second network (R2), the switch associated with one power source being independent of the switch associated with the other power source/other power sources.

5. The facility according to one of the preceding claims which, if it requires redundancy in the production of electrical power, then comprises at least two power sources (SE1, SE2, SE3, SE4), **characterized by** the fact that said first AC voltage network is split into two independent parts (R1, R1"), at least one power source being configured to be switched with one of these two parts, whilst at least one other power source (R1', R1) is configured to be switched with the other of these two parts.

6. The facility according to claim 5, **characterized by** the fact that each of the two independent parts (R1, R1') is shaped to be switched with the second DC voltage network (R2).

7. The facility according to claim 5 or 6, **characterized by** the fact that the two independent parts (R1, R1') of said first network comprise connection means (COM) with each other.

8. The facility according to one of the preceding claims, **characterized by** the fact that it comprises at least one reversible converter (4, 5) configured to transfer power from the first network (R1, R1') to the second network (R2) and conversely.

9. The facility according to one of the preceding claims, **characterized by** the fact that between said power source (SE1, SE2, SE3, SE4) and the second DC voltage distribution network (R2) there is at least one AC/DC voltage converter (2).

10. A ship provided with an electrical facility conforming to one of the preceding claims.

11. A method for controlling an electrical facility conforming to one of claims 1 to 9 equipping a ship, **characterized by** the fact that said power source (SE1, SE2, SE3, SE4) is caused to operate at fixed speed when it is switched to said first AC voltage distribution network (R1, R1'), whilst said power source (SE1, SE2, SE3, SE4) is caused to operate at variable speed when it is switched to said second DC voltage distribution network (R2).

12. The method according to claim 11, wherein a single power source (SE1, SE2, SE3, SE4) is in operation, **characterized by** the fact that said power source is switched to said second DC voltage distribution network (R2) when the network power demand is lower than a predefined value, whilst said power source is switched to said first AC voltage distribution network (R1, R1') when the network power demand is higher than this predefined value.

13. The method according to claim 12, **characterized by** the fact that said predefined value corresponds to a power value P over and above which the fuel consumption of the power source at constant speed is lower than its fuel consumption at variable speed.

14. The method according to claim 13, **characterized by** the fact that said power P is such that it meets the following equation:

$$SFOC_{VS}\left(\frac{\frac{P}{\eta_{conversionVS}}}{P_{nominal}}\right) * \frac{P}{\eta_{conversionVS}} = SFOC_{CS}\left(\frac{\frac{P}{\eta_{conversionCS}}}{P{nominal}}\right) * \frac{P}{\eta_{conversionCS}}$$

an equation where:

SFOCvs(load): Specific consumption of the power source at variable speed as a function of its load
SFOCcs(load): Specific consumption of the power source at constant speed as a function of its load
P: Networkpower demand downstream of the converters, transformers and alternators
$\eta_{conversion}$: Conversion yield of alternators, converters and transformers needed for electricity distribution $P_{nominal}$ = Nominal power of the powersource

15. The method according to claim 11, wherein said ship comprises at least two power sources (SE1, SE2, SE3, SE4), **characterized by** the fact that at least one power source is switched to said first AC voltage provider network (R1) and at least one other power source to said second DC voltage distribution network (R2) .

**16.** The method according to claim 13, **characterized by** the fact that the operation of said power sources is configured so that the fuel consumption of the facility is minimal.

**17.** The method according to one of claims 11 to 16, **characterized by** the fact the said controlling is operated by an automatic command and control system.

FIG. 1

**EP 3 054 549 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20100094490 A
- EP 2423103 A
- WO 2005049418 A
- WO 9811643 A